(19) Europäisches Patentamt / European Patent Office / Office européen des brevets

(11) **EP 4 400 532 A1**

(12) **EUROPEAN PATENT APPLICATION**
published in accordance with Art. 153(4) EPC

(43) Date of publication:
**17.07.2024 Bulletin 2024/29**

(21) Application number: **22867625.0**

(22) Date of filing: **30.08.2022**

(51) International Patent Classification (IPC):
**C08G 65/34** (2006.01)     **C08G 65/46** (2006.01)

(52) Cooperative Patent Classification (CPC):
**C08G 65/34; C08G 65/46**

(86) International application number:
**PCT/KR2022/012946**

(87) International publication number:
**WO 2023/038356 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.09.2021 KR 20210120424**

(71) Applicant: **SK Chemicals Co., Ltd.
Seongnam-si, Gyeonggi-do 13494 (KR)**

(72) Inventors:
• **CHO, Han-Gyeol
Seongnam-si, Gyeonggi-do 13494 (KR)**
• **CHUNG, Jae-Il
Seongnam-si, Gyeonggi-do 13494 (KR)**
• **CHO, Hyun Jun
Seongnam-si, Gyeonggi-do 13494 (KR)**

(74) Representative: **Berggren Oy
P.O. Box 16
Eteläinen Rautatiekatu 10A
00101 Helsinki (FI)**

(54) **METHOD FOR PREPARATION OF POLYTRIMETHYLENE ETHER GLYCOL AND POLYTRIMETHYLENE ETHER GLYCOL PREPARED THEREBY**

(57)     This invention relates to a method for preparing polytrimethylene ether glycol having excellent properties, by improving purification efficiency using an organic solvent in the hydrolysis step, and polytrimethylene ether glycol prepared thereby.

EP 4 400 532 A1

**Description**

**[TECHNICAL FIELD]**

Cross-reference to Related Applications(s)

This application claims the benefit of Korean Patent Application No. 10-2021-0120424 filed on September 9, 2021 with the Korean Intellectual Property Office, the disclosures of which are herein incorporated by reference in their entirety.

This invention relates to a preparation method of polytrimethylene ether glycol, and polytrimethylene ether glycol prepared thereby.

**[BACKGROUND OF ART]**

Polytrimethylene ether glycol(P03G), which is ether-based polyol based on oxetene or 1,3-propanediol(1,3-PDO), can give differentiated polyurethane properties due to the unique crystal structure. Polyurethane applying P03G that exhibits excellent mechanical properties as compared with high elastic restoring force can be applied to the application fields different from the existing polyether-based polyol such as PEG(Poly ethylene glycol), PPG(Poly propylene glycol), PTMG(Poly tetramethylene glycol), and the like, and thus, many studies have been progressed till now.

A preparation method of polytrimethylene ether glycol is largely classified into two methods. One method prepares polytrimethylene ether glycol by ring open polymerization of oxetene, and although it is a simple method, it remains in the research area because commercialization could not be progressed due to instability of raw material.

The other method prepares polytrimethylene ether glycol by condensation polymerization from 1,3-propanediol. Although this method is somewhat complicated compared to the preparation method by ring open polymerization of oxetene, it can be progressed under relatively mild polymerization conditions. This method is disclosed in US Patent Registration No. 6977291 and US Patent Registration No. 7745668, for example.

Meanwhile, as described in the Patent, in case polytrimethylene ether glycol is prepared by condensation polymerization from 1,3-propanediol, there are several problems. First, according to the condensation polymerization reaction, 1,3-propanediol is reacted in the presence of an acid catalyst for a long time, but during this process, the acid catalyst reacts with monomers and a part of polymer chains exist in the form of acid ester, which should be removed during the process of obtaining aimed polytrimethylene ether glycol.

Due to use of an acid catalyst as well as generation of acid ester during the polymerization process, the purification process of polytrimethylene ether glycol passes through many steps, and generally comprises hydrolysis, neutralization and filtration processes. Hydrolysis is a process of converting acid ester into hydroxyl groups after polymerization. High molecular weight polytrimethylene ether glycol has high viscosity, and has increased hydrophobicity due to lengthened chains, and due to polarity difference from water, compatibility is hindered. Thus, even after hydrolysis, a part of chain ends remain as acid ester.

After hydrolysis, a neutralization step using base is required to neutralize residual acid. Wherein, if hydrolysis is not completely progressed, basic material is produced through the reaction of residual acid ester with base. The produced basic material is difficult to remove by the subsequent process and may affect alkalinity, thus causing deterioration of qualities of polytrimethylene ether glycol and polyurethane and polyurethane urea using the same as raw material.

And, a neutralized polymer mixture is an emulsion in which an aqueous phase and an organic phase coexist. Herein, the aqueous phase including salts is trapped inside the organic phase including polytrimethylene ether glycol, and thus, salts are difficult to remove only by simple phase separation, and are removed through evaporation of water, followed by filtration.

Meanwhile, in the filtration process of salts, as the particle size of salt is larger, filter pores are blocked less, a filtration speed increases, and filtration efficiency increases, and thus, it is unlikely to be incorporated inside polytrimethylene ether glycol. To the contrary, in case the particle size of salt is fine, salt particles may be incorporated inside polytrimethylene ether glycol even after filtration, thereby increasing alkalinity of the final polytrimethylene ether glycol. The alkalinity of polyol raw material such as polytrimethylene ether glycol is managed as CPR(Controlled polymerization rate). According to CPR analysis standard ISO 14899, it is known that if the alkalinity of polyol raw material is high, during the production of prepolymer such as polyurethane, and the like, gelation may be induced, and a reaction speed may be influenced. Thus, it is necessary to manage CPR of polyol raw material low.

Thus, in order to prepare polytrimethylene ether glycol with excellent quality, there is a demand for studies on purification methods for effectively removing acid ester in a hydrolysis step, and effectively removing salts produced in neutralization and separation processes.

Thus, as the result of studies on the efficient purification method of polytrimethylene ether glycol having high molecular weight, the inventors confirmed that if a series of steps are passed through as described later, the above problems can be overcome, and completed the invention.

## [DETAILED DESCRIPTION OF THE INVENTION]

### [Technical Problem]

It is an object of the invention to provide a preparation method of polytrimethylene ether glycol capable of effectively removing reaction by-products and salts produced in the purification process, and polytrimethylene ether glycol prepared thereby.

### [Technical Solution]

In order to achieve the object, according to the invention, there is provided a method for preparing polytrimethylene ether glycol comprising steps of: conducting condensation polymerization of diol monomers in the presence of an acid catalyst to prepare a polymerization product (step 1); hydrolyzing the polymerization product using an organic solvent and water to prepare a hydrolyzed mixture (step 2); neutralizing the hydrolyzed mixture using basic salts (step 3); separating an aqueous phase and an organic phase after neutralization (step 4); and filtering salts existing in the organic phase (step 5).

According to the invention, there is also provided polytrimethylene ether glycol prepared according to the above preparation method.

According to the invention, there is also provided polytrimethylene ether glycol wherein the number average molecular weight is 1000 to 5000 g/mol, and miliequivalent of base per 30 kg of polytrimethylene ether glycol is 3 or less.

In case polytrimethylene ether glycol is prepared through a polymerization reaction of diol monomers, an acid catalyst is used, and side reactions are progressed to generate by-products having ester groups at the end of chain. Such by-products including ester groups causes property deviation of articles prepared using polytrimethylene ether glycol, thus limiting the application field of polytrimethylene ether glycol.

In general, the ester groups are converted into hydroxyl groups through a hydrolysis process, and through the process of neutralizing residual acid, polytrimethylene ether glycol is purified. And, salts produced during the hydrolysis and neutralization processes are finally removed through filtration.

However, in the hydrolysis process, due to polarity difference between polytrimethylene ether glycol and water, compatibility is hindered, and thus ester may not be completely converted into hydroxyl groups and partly remain. And, during the neutralization process, ester groups remaining after hydrolysis produce basic materials through a saponification reaction, and in the process of neutralizing a strong acid solution, salts are produced. And, an organic phase and an aqueous phase formed during the neutralization process are emulsified, thus making it difficult to remove salts.

Thus, according to the invention, by adding an organic solvent having high miscibility with water in the hydrolysis step as described later, a degree of hydrolysis of acid ester is increased, emulsification is prevented after the neutralization process, thus facilitating separation of an aqueous phase and an organic phase, and growth of salts is stably caused during removal of moisture of the organic phase to improve filtration efficiency, thereby increasing purification efficiency in a series of purification processes.

Hereinafter, the invention will be explained in detail.

### Polymerization step (step 1)

The step 1 of the invention is a step wherein polytrimethylene ether glycol is prepared by condensation polymerization of reactant diol monomers in the presence of an acid catalyst.

Preferably, the diol monomers are one or more selected from the group consisting of 1,3-propanediol, 1,3-propanediol dimers and 1,3-propanediol trimers.

Specifically, the condensation polymerization catalyst is selected from the group consisting of Lewis acid, Bronsted acid, super acid, and a mixture thereof. More preferably, the catalyst is selected from the group consisting of inorganic acid, organic sulfonic acid, hetero polybasic acid, and metal salts. Most preferably, the catalyst is selected from the group consisting of sulfuric acid, flourosulfonic acid, phosphoric acid, p-toluenesulfonic acid, benzenesulfonic acid, phosphotungstnic acid, phosphomolybdic acid, trifluoromethanesulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate and zirconium triflate.

It is preferable that the catalyst is used at the concentration of 0.1 to 20 wt%, more preferably 1 to 5 wt%, based on the weight of the reaction mixture.

And, preferably, the condensation polymerization is conducted at 150°C to 250°C, more preferably 160°C to 220°C. And, it is preferable that the reaction is conducted in the presence of inert gas, preferably under nitrogen.

Hydrolysis step (step 2)

The step 2 of the invention is a step wherein hydrolysis is progressed to remove acid ester, by-products of polytrimethylene ether glycol, after the polymerization step.

As explained above, in case water is added to a polymerization product comprising polytrimethylene ether glycol, compatibility may be deteriorated due to polarity difference, and thus, hydrolysis may not be completely progressed and a part of chain ends remain in the form of acid ester.

In this disclosure, by adding an organic solvent having high miscibility with the polymerization product and water before adding water during the hydrolysis step, polymer material comprising polytrimethylene ether glycol is dissolved to form a uniform phase. Thereafter, even if water is added, compatibility is not hindered, and hydrolysis can be progressed in a uniform phase, and thus, acid ester produced after polymerization can be effectively converted into hydroxyl groups.

The solvents that can be used herein are not limited as long as they have miscibility with polytrimethylene ether glycol and water. Preferably, the organic solvent is one or more selected from the group consisting of ethanol, 1-propaneol, isopropanol, 1-butanol, acetone, tetrahydrofuran, 1,4-dioxane, acetonitrile, and dimethylformamide.

Preferably, the organic solvent is used in the amount of 0.1 to 0.9 parts by weight, based on the amount of water used in the hydrolysis step. More preferably, the amount of the organic solvent is 0.15 parts by weight or more, 0.20 parts by weight or more, 0.25 parts by weight or more, 0.30 parts by weight or more, or 0.35 parts by weight or more, and 0.85 parts by weight or less, 0.80 parts by weight or less, 0.75 parts by weight or less, or 0.70 parts by weight or less, based on the amount of water used in the hydrolysis step. If the amount of the organic solvent is less than 0.1 parts by weight based on the amount of water used in the hydrolysis step, polytrimethylene ether glycol may not be sufficiently dissolved, and thus it may be difficult to form a uniform phase in the hydrolysis step, and if it is greater than 0.9 parts by weight, process cost may be additionally generated in a separate solvent removal process.

And, the hydrolysis step may be progressed at an appropriate temperature according to the solvent used, and preferably, it may be progressed at 30 °C to 90 °C .

Neutralization step (step 3)

The step 3 of the invention is a step progressed after the hydrolysis step, wherein a hydrolyzed mixture comprising residual acid is neutralized using basic salt.

According to the preparation method of the invention, since acid ester can be efficiently converted into hydroxyl groups in the hydrolysis step, it is unlikely that basic materials are produced through the saponification reaction of base and acid ester in the neutralization step, and thus, the quality of prepared polytrimethylene ether glycol is excellent.

Preferably, the basic salt is one or more selected from the group consisting of sodium carbonate, calcium carbonate, calcium hydroxide, calcium oxide, magnesium carbonate, magnesium hydroxide, magnesium oxide, barium carbonate, barium hydroxide, and barium oxide.

Preferably, the base salt is used in the amount of 1 to 7 wt%, based on the amount of water introduced in the hydrolysis and neutralization steps. More preferably, the amount of the basic salt is 1.25 wt% or more, 1.5 wt% or more, 1.75 wt% or more, or 2 wt% or more, and 6 wt% or less, 5 wt% or less, 4.5 wt% or less, or 4 wt% or less, based on the amount of water introduced in the hydrolysis and neutralization steps. In case the basic salt is used in the above range, it may be also easy to control neutralization of acid ester and alkalinity of polytrimethylene ether glycol, and excessive neutralization reactions may be prevented, and thus, the above range is suitable for removal of appropriately produced salts in phase separation and filtration steps described below.

And, according to the preparation method of the invention, by progressing the neutralization step after the hydrolysis step, the step can be progressed in the presence of a solvent, and in this case, alkalinity of polytrimethylene ether glycol can be more stably controlled, and phase separation and filtration steps described below can be more efficiently progressed.

**Phase separation and filtration steps (step 4 and step 5)**

The step 4 and step 5 of the invention are steps wherein an organic phase is obtained through phase separation, and salts in the organic phase are removed through filtration.

In the mixture after the neutralization step, an aqueous phase and an organic phase exist together. In case the aqueous phase and organic phase are emulsified after neutralization, salts existing in the aqueous phase may be trapped inside the organic phase, and thus, it may be difficult to remove salts only by phase separation, and the salts should be removed through filtration after evaporating water.

And, in general, it is known that in case crystallization is progressed in an aqueous solution phase, after crystal nucleus is produced, solute molecules are stacked on the surface through mass transfer and crystal is grown. However, if the molecular weight of prepared polytrimethylene ether glycol is high, due to high viscosity property, there is a difficulty in mass transfer, and thus, growth of salt is not stably progressed, and the size of salt becomes small, thus lowering filtration efficiency.

According to the preparation method of polytrimethylene ether glycol of the invention, the phase separation step is progressed after the neutralization step, and a density difference between polytrimethylene ether glycol and salt formed in the neutralization step is larger than a density difference between polytrimethylene ether glycol and sulfuric acid, and thus, an aqueous phase is easily separated during phase separation, and thereby, a mixture of water, solvents and salts existing in the aqueous phase can be easily separated.

And, due to compatibility of the organic solvent introduced in the hydrolysis step, emulsification of the aqueous phase and organic phase can be prevented even after the neutralization step, and ultimately, salts produced in the neutralization step can be stably grown, thereby improving the efficiency of the subsequent filtration step.

And, in case the phase separation process is progressed after neutralization, the amount of solvents required for phase separation can be reduced, and compared to the case of progressing phase separation before neutralization, salts produced after neutralization can be effectively removed, and thus, process cost can be reduced and output can be increased, thereby improving process efficiency.

And, according to one embodiment of the invention, after the step 4, a step of removing water and solvents existing in the organic phase through distillation may be further included. In general, distillation can be progressed at low pressure or atmospheric pressure, under heating condition, but the distillation conditions are not specifically limited as long as water and solvents are removed without side reactions in the organic phase. And, although distillation methods and apparatuses that can be used are not specifically limited, a stripper, a thin film evaporator, a falling film evaporator, or a short path evaporator, and the like may be used.

After removing water and solvents existing in the organic phase through the distillation step, remaining salts are removed through filtration. As explained above, in this disclosure, by adding an organic solvent in the hydrolysis step, hydrolysis efficiency is increased, and salts produced in the neutralization step are stably grown, and thus, salts existing in the organic phase are effectively removed in the final filtration step, thereby minimizing the amount of salts, i.e., impurities incorporated in polytrimethylene ether glycol.

As the filtration method used in the filtration step, commonly known technology for removing salts may be used without specific limitations, but gravity filtration, centrifugal filtration, or pressure filtration may be used. And, a filter press, a candle filter, a pressure leaf filter, or a nutche filter may be used.

Since the above explained preparation method of polytrimethylene ether glycol of the invention uses an organic solvent in the hydrolysis step, byproduct and salts can be efficiently removed.

Meanwhile, according to another embodiment of the invention, there is provided polytrimethylene ether glycol prepared by the preparation method of polytrimethylene ether glycol.

Preferably, the polytrimethylene ether glycol has number average molecular weight of 1000 to 5000 g/mol.

And, according to the invention, there is also provided polytrimethylene ether glycol wherein the number average molecular weight is 1000 to 5000 g/mol, and miliequivalent of base per 30 kg of polytrimethylene ether glycol is 3 or less. The equivalent of base per unit weight of polytrimethylene ether glycol indicates the above explained CPR, and CPR commonly indicates the concentration of basic materials in polyol, and indicates akalinity of polytrimethylene ether glycol herein. The polytrimethylene ether glycol according to the invention has remarkably low CPR, and thus, is highly useful as raw material of polyurethane. The miliequivalent of base in polytrimethylene ether glycol is measured according to ASTM D6437, and the measurement method will be described in Example described later.

Preferably, the number average molecular weight of the polytrimethylene ether glycol according to the invention is 1500 g/mol or more, 1700 g/mol or more, or 2000 g/mol or more, and 4000 g/mol or less, 3500 g/mol or less, or 3000 g/mol or less. And, preferably, miliequivalent of base per 30 kg of the polytrimethylene ether glycol according to the invention may be 2.5 or less, 2 or less, 1.5 or less, or 1 or less. Meanwhile, the lower the miliequivalent of base is, the more excellent the quality is, and thus, the lower limit is theoretically 0, but for example, may be 0.1 or more, 0.2 or more, 0.3 or more, or 0.5 or more.

Preferably, metal ion content, based on the weight of polytrimethylene ether glycol, is 10 ppm or less. More preferably, metal ion content, based on the weight of polytrimethylene ether glycol, is 8 ppm or less, 5 ppm or less, or 3 ppm or less. The metal ions are derived from basic salts introduced during the preparation of polytrimethylene ether glycol, and as explained above, in case a neutralization step is progressed while hydrolysis is not sufficiently achieved, the metal ions exist at the end of chain through a saponification reaction, or exist in the form of salts by the acid used as a catalyst. Thus, in case hydrolysis and filtration are not sufficiently achieved, the metal ions remain in the final polytrimethylene ether glycol. The polytrimethylene ether glycol according to the invention has low metal ion content because the above explained preparation steps are passed through, thereby effectively removing the metal ions. Meanwhile, the lower the metal ions content is, the more excellent the quality is, and thus, the lower limit may be theoretically 0, but for example, may be 0.1 ppm or more, 0.3 ppm or more, or 0.5 ppm or more.

As explained above, the polytrimethylene ether glycol prepared by the preparation method of the invention has high molecular weight and has excellent quality, and thus can be highly useful as raw materials of polyurethane resin, and the like.

**[Advantageous Effects]**

As explained above, the preparation method of polytrimethylene ether glycol according to the invention can effectively remove reaction by-products and salts produced during the purification process, and thus, is effective for the preparation of high molecular weight polytrimethylene ether glycol.

**[DETAILED DESCRIPTION OF THE EMBODIMENTS]**

Hereinafter, preferable examples are presented for better understanding of the invention, but these examples are presented only as the illustrations of the invention and the scope of the invention is not limited thereby.

**Example 1**

A 5 L double jacket reactor was filled with 1,3-propanediol(3000 g) and sulfuric acid(27 g), and then, polymerization was conducted at 167°C for 35 hours under sparging with nitrogen gas, and by-products were removed through the upper condenser.

The polymerization product was cooled to 80°C, isopropylalcohol(IPA, 750 g) was introduced, and the mixture was stirred for 10 minutes. And then, deionized water(1500 g) was added and hydrolysis was progressed for 4 hours. After hydrolysis, 51.56 g of $Na_2CO_3$ were dissolved in 150 g of deionized water and introduced, and stirred for 1 hour to progress neutralization. Nitrogen sparging and stirring were stopped, and the mixture was allowed to stand for 1 hour to induce phase separation and the separated aqueous phase was discharged. And then, by heating the organic phase to 120 °C under reduced pressure for 3 hours, remaining water/solvents were evaporated, and by filtration with a Nutche filter, a polytrimethylene ether glycol product was obtained.

**Example 2**

Polytrimethylene ether glycol was prepared by the same method as Example 1, except that the polymerization product was cooled to 75°C instead of 80°C, and ethanol was used instead of isopropyl alcohol.

**Example 3**

Polytrimethylene ether glycol was prepared by the same method as Example 1, except that the polymerization product was cooled to 55°C instead of 80°C, and acetone was used instead of isopropyl alcohol.

**Example 4**

Polytrimethylene ether glycol was prepared by the same method as Example 1, except that the polymerization product was cooled to 65°C instead of 80°C, and tetrahydrofuran was used instead of isopropyl alcohol.

**Example 5**

Polytrimethylene ether glycol was prepared by the same method as Example 1, except that the polymerization was progressed for 40 hours instead of 35 hours.

**Example 6**

Polytrimethylene ether glycol was prepared by the same method as Example 2, except that the polymerization was progressed for 40 hours instead of 35 hours.

**Example 7**

Polytrimethylene ether glycol was prepared by the same method as Example 3, except that the polymerization was progressed for 40 hours instead of 35 hours.

**Example 8**

Polytrimethylene ether glycol was prepared by the same method as Example 4, except that the polymerization was progressed for 40 hours instead of 35 hours.

**Comparative Example 1**

Polytrimethylene ether glycol was prepared by the same method as Example 1, except that IPA was not introduced.

**Comparative Example 2**

A 5 L double jacket reactor was filled with 1,3-propanediol(3000 g) and sulfuric acid(27 g), and then, polymerization was conducted at 167°C for 35 hours under sparging with nitrogen gas, and by-products were removed through the upper condenser.

The polymerization product was cooled to 95°C, and deionized water(1500 g ) was added to progress hydrolysis for 4 hours. After hydrolysis, the mixture was cooled to 80°C, isopropyl alcohol(IPA, 750 g) was introduced, and the mixture was stirred for 10 minutes. And then, 51.56 g of $Na_2CO_3$ were dissolved in 150 g of deionized water and introduced, and stirred for 1 hour to progress neutralization. Nitrogen sparging and stirring were stopped, and the mixture was allowed to stand for 1 hour to induce phase separation and the separated aqueous phase was discharged. And then, by heating the organic phase to 120 °C under reduced pressure for 3 hours, remaining water/solvents were evaporated, and by filtration with a Nutche filter, a polytrimethylene ether glycol product was obtained.

**Comparative Example 3**

Polytrimethylene ether glycol was prepared by the same method as Comparative Example 1, except that the hydrolyzed mixture was cooled to 75°C instead of 80°C, and ethanol was used instead of isopropyl alcohol.

**Comparative Example 4**

Polytrimethylene ether glycol was prepared by the same method as Comparative Example 1, except that the hydrolyzed mixture was cooled to 55°C instead of 80°C, and acetone was used instead of isopropyl alcohol.

**Comparative Example 5**

Polytrimethylene ether glycol was prepared by the same method as Comparative Example 1, except that the hydrolyzed mixture was cooled to 65°C instead of 80°C, and tetrahydrofuran was used instead of isopropyl alcohol.

**Comparative Example 6**

Polytrimethylene ether glycol was prepared by the same method as Comparative Example 1, except that the polymerization was progressed for 40 hours instead of 35 hours.

**Comparative Example 7**

Polytrimethylene ether glycol was prepared by the same method as Comparative Example 2, except that the polymerization was progressed for 40 hours instead of 35 hours.

**Comparative Example 8**

Polytrimethylene ether glycol was prepared by the same method as Comparative Example 3, except that the hydrolyzed mixture was cooled to 75°C instead of 80°C, and ethanol was used instead of isopropyl alcohol.

**Comparative Example 9**

Polytrimethylene ether glycol was prepared by the same method as Comparative Example 4, except that the hydrolyzed mixture was cooled to 55°C instead of 80°C, and acetone was used instead of isopropyl alcohol.

**Comparative Example 10**

Polytrimethylene ether glycol was prepared by the same method as Comparative Example 5, except that the hydrolyzed mixture was cooled to 65°C instead of 80°C, and tetrahydrofuran was used instead of isopropyl alcohol.

**Experimental Example**

Using the polytrimethylene ether glycol prepared in each Example and Comparative Example, the following properties were measured.

(1) Number average molecular weight (g/mol) and sulfate group content(mol %)

The polytrimethylene ether glycol prepared in each Example and Comparative Example was dissolved in a chloroform-d solvent, and then, using nuclear magnetic resonance analyzer (manufacturer: JEOL, model name: JNM ECA600), number average molecular weight(Mn) and the content of remaining sulfate groups were measured.
The number average molecular weight(Mn) was calculated according to the following Formula 1.

Mn (g/mol)=(peak area of mid group / peak are of end group + 1) * 58.08 + 18.02          [Formula 1]

The content of sulfate groups was calculated according to the following Formula 2.

Sulfate group (mol%) = peak area of sulfate group / peak are of end group * 100          [Formula 2]

(2) Phase separation efficiency (%)

A phase separation efficiency was measured according to the following Formula 3.

Phase separation efficienty (%) = weight of aqueous solution layer separated during phase separation / sum (organic + aqueous phase weight) * 100          [Formula 3]

(3) CPR (meqOH/30kg)

A CPR value was measured according to ASTM D6437. Specifically, for 100 ml of methanol, a blank test was progressed with 0.005 N HCl in methanolic solution, using automatic titrator (Metrohm, Titrino 905). And then, 15 g of polytrimethylene ether glycol prepared in each Example and Comparative Example was dissolved in 100 ml of methanol, and titrated using 0.005 N HCl in methanolic solution, and then, alkalinity number was calculated according to the following Formula 4.

$$[\text{Formula 4}]$$

$$\text{CPR (meqOH/30kg)} = (S - B) * 0.005 * 3000 / W$$

In the Formula 4,

S is the aliquot amount of HCl solution used for a sample test,
B is the aliquot amount of HCl solution used for a blank test, and
W is the weight of a sample.

(4) Filtration efficiency (L/m$^2$ hr)

Using a Nutche filter, a time required to treat 1 L during filtration was measured, and filtration efficiency was calculated according to the following Formula 5.

[Formula 5]

$$Filtration\ efficiency(L/m^2\ hr) = V/(A*T)$$

In the Formula 5,

V is the volume(L) of filtered solution,

A is the filtration area of Nutche filter used, and

T is a time taken for filtration.

(5) Metal ion content (ppm)

For the polytrimethylene ether glycol prepared in each Example and Comparative Example, using inductively coupled plasma atomic emission spectrometer (manufacturer: Agilent, model name: Agilent 5100), the content of metal ions($Na^+$), based on the weight of polytrimethylene ether glycol, was measured. Wherein, the limit of quantification was 2 ppm.

The results were shown in the following Table 1.

[Table 1]

| | solvent | Mn (g/mol) | Sulfate group (mol%) | Phase separation efficiency (%) | CPR (meqOH/ 30kg) | Metal ion content (ppm) | Filtration efficiency ($L/m^2hr$) |
|---|---|---|---|---|---|---|---|
| Example 1 | IPA | 2256 | N/A | 37 | 0.86 | <2 | 451 |
| Example 2 | ethanol | 2244 | N/A | 39 | 0.73 | <2 | 455 |
| Example 3 | acetone | 2261 | N/A | 34 | 0.93 | <2 | 443 |
| Example 4 | THF | 2265 | N/A | 35 | 0.89 | <2 | 447 |
| Example 5 | IPA | 2855 | N/A | 34 | 0.91 | <2 | 338 |
| Example 6 | ethanol | 2851 | N/A | 36 | 0.88 | <2 | 344 |
| Example 7 | acetone | 2870 | N/A | 30 | 0.99 | <2 | 322 |
| Example 8 | THF | 2865 | N/A | 32 | 0.95 | <2 | 329 |
| Comparati ve Example 1 | None | 2410 | 0.27 | N/A | 30 | 58 | 230 |
| Comparati ve Example 2 | IPA | 2296 | 0.04 | 27 | 5.78 | 12 | 311 |
| Comparati ve Example 3 | ethanol | 2280 | 0.03 | 29 | 5.26 | 11 | 316 |
| Comparati ve Example 4 | acetone | 2303 | 0.03 | 23 | 5.94 | 13 | 305 |
| Comparati ve Example 5 | THF | 2305 | 0.05 | 24 | 5.83 | 12 | 309 |
| Comparati ve Example 6 | None | 3005 | 0.56 | N/A | 62 | 119 | 123 |
| Comparati ve Example 7 | IPA | 2899 | 0.09 | 22 | 10.23 | 20 | 183 |
| Comparati ve Example 8 | ethanol | 2881 | 0.08 | 25 | 10.08 | 19 | 185 |
| Comparati ve Example 9 | acetone | 2911 | 0.10 | 20 | 10.57 | 21 | 180 |
| Comparati ve Example 10 | THF | 2905 | 0.10 | 21 | 10.30 | 18 | 181 |

As shown in Table 1, it can be confirmed that, according to the preparation method of polytrimethylene ether glycol of the invention, by adding an organic solvent in the hydrolysis step, phase separation efficiency and filtration efficiency are excellent, and sulfate groups are completely removed. It can be also confirmed that the polytrimethylene ether glycol according to the invention maintains high number average molecular weight, but CPR is remarkably decreased, and metal ion content is very low.

**Claims**

1. A method for preparing polytrimethylene ether glycol comprising steps of:

   conducting condensation polymerization of diol monomers in the presence of an acid catalyst to prepare a polymerization product (step 1);
   hydrolyzing the polymerization product using an organic solvent and water to prepare a hydrolyzed mixture (step 2);
   neutralizing the hydrolyzed mixture using basic salt (step 3);
   separating an aqueous phase and an organic phase after neutralization (step 4); and
   filtering salts existing in the organic phase (step 5).

2. The method for preparing polytrimethylene ether glycol according to claim 1, wherein the diol monomers are one or more selected from the group consisting of 1,3-propanediol, 1,3-propanediol dimers and 1,3-propanediol trimers.

3. The method for preparing polytrimethylene ether glycol according to claim 1, wherein the acid catalyst is one or more selected from the group consisting of sulfuric acid, flourosulfonic acid, phosphoric acid, p-toluenesulfonic acid, benzenesulfonic acid, phosphotungstnic acid, phosphomolybdic acid, trifluoromethanesulfonic acid, 1,1,2,2-tetrafluoroethanesulfonic acid, 1,1,1,2,3,3-hexafluoropropanesulfonic acid, bismuth triflate, yttrium triflate, ytterbium triflate, neodymium triflate, lanthanum triflate, scandium triflate and zirconium triflate.

4. The method for preparing polytrimethylene ether glycol according to claim 1, wherein the organic acid is one or more selected from the group consisting of ethanol, 1-propaneol, isopropanol, 1-butanol, acetone, tetrahydrofuran, 1,4-dioxane, acetonitrile, and dimethylformamide.

5. The method for preparing polytrimethylene ether glycol according to claim 1, wherein the organic solvent is used in the amount of 0.1 to 0.9 parts by weight, based on the amount of water used in the hydrolysis step.

6. The method for preparing polytrimethylene ether glycol according to claim 1, wherein the basic salt is one or more selected from the group consisting of sodium carbonate, calcium carbonate, calcium hydroxide, calcium oxide, magnesium carbonate, magnesium hydroxide, magnesium oxide, barium carbonate, barium hydroxide, and barium oxide.

7. The method for preparing polytrimethylene ether glycol according to claim 1, further comprising a step of removing water and solvents existing in the organic phase through distillation, after step 4.

8. Polytrimethylene ether glycol prepared by the preparation method of polytrimethylene ether glycol according to any one of claims 1 to 7.

9. The polytrimethylene ether glycol according to claim 8, wherein the number average molecular weight of the polytrimethylene ether glycol is 1000 to 5000.

10. Polytrimethylene ether glycol wherein the number average molecular weight is 1000 to 5000 g/mol, and miliequivalent of base per 30 kg of polytrimethylene ether glycol is 3 or less.

11. The polytrimethylene ether glycol according to claim 10, wherein metal ion content, based on the weight of the polytrimethylene ether glycol, is 10 ppm or less.

## INTERNATIONAL SEARCH REPORT

| International application No. |
|---|
| **PCT/KR2022/012946** |

### A. CLASSIFICATION OF SUBJECT MATTER

**C08G 65/34**(2006.01)i; **C08G 65/46**(2006.01)i

According to International Patent Classification (IPC) or to both national classification and IPC

### B. FIELDS SEARCHED

Minimum documentation searched (classification system followed by classification symbols)

C08G 65/34(2006.01); C07C 41/03(2006.01); C07C 41/09(2006.01); C07C 43/10(2006.01); C08G 65/26(2006.01); C08G 65/30(2006.01); C08G 65/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리트리메틸렌 에테르 글리콜(polytrimethylene ether glycol), 유기용매(organic solvent), 가수분해(hydrolysis)

### C. DOCUMENTS CONSIDERED TO BE RELEVANT

| Category* | Citation of document, with indication, where appropriate, of the relevant passages | Relevant to claim No. |
|---|---|---|
| A | KR 10-2008-0089491 A (E.I.DU PONT DE NEMOURS AND COMPANY) 06 October 2008 (2008-10-06)<br>See claim 1; paragraph [0104]; and table 1 (example 1). | 1-11 |
| A | KR 10-2019-0038162 A (SK CHEMICALS CO., LTD.) 08 April 2019 (2019-04-08)<br>See entire document. | 1-11 |
| A | US 2011-0112331 A1 (ETCHELLS, A. W. et al.) 12 May 2011 (2011-05-12)<br>See entire document. | 1-11 |
| A | KR 10-2007-0024607 A (E.I.DU PONT DE NEMOURS AND COMPANY) 02 March 2007 (2007-03-02)<br>See entire document. | 1-11 |
| A | KR 10-2008-0035697 A (E.I. DU PONT DE NEMOURS AND COMPANY) 23 April 2008 (2008-04-23)<br>See entire document. | 1-11 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 November 2022** | **30 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012946**

| Patent document cited in search report | | | Publication date (day/month/year) | Patent family member(s) | | | Publication date (day/month/year) |
|---|---|---|---|---|---|---|---|
| KR | 10-2008-0089491 | A | 06 October 2008 | CN | 101389689 | A | 18 March 2009 |
| | | | | EP | 1973962 | A1 | 01 October 2008 |
| | | | | EP | 1973962 | B1 | 27 April 2011 |
| | | | | JP | 2009-523894 | A | 25 June 2009 |
| | | | | JP | 4976422 | B2 | 18 July 2012 |
| | | | | KR | 10-1372767 | B1 | 10 March 2014 |
| | | | | US | 2007-0173669 | A1 | 26 July 2007 |
| | | | | US | 7164046 | B1 | 16 January 2007 |
| | | | | US | 7388115 | B2 | 17 June 2008 |
| | | | | WO | 2007-084637 | A1 | 26 July 2007 |
| KR | 10-2019-0038162 | A | 08 April 2019 | CN | 111094392 | A | 01 May 2020 |
| | | | | EP | 3689943 | A1 | 05 August 2020 |
| | | | | EP | 3689943 | A4 | 21 July 2021 |
| | | | | JP | 2020-535279 | A | 03 December 2020 |
| | | | | US | 2020-0277437 | A1 | 03 September 2020 |
| | | | | WO | 2019-066310 | A1 | 04 April 2019 |
| US | 2011-0112331 | A1 | 12 May 2011 | CN | 102597059 | A | 18 July 2012 |
| | | | | EP | 2499184 | A2 | 19 September 2012 |
| | | | | KR | 10-2012-0094016 | A | 23 August 2012 |
| | | | | WO | 2011-057236 | A2 | 12 May 2011 |
| | | | | WO | 2011-057236 | A3 | 06 October 2011 |
| KR | 10-2007-0024607 | A | 02 March 2007 | CN | 1968916 | A | 23 May 2007 |
| | | | | CN | 1968916 | C | 23 May 2007 |
| | | | | EP | 1756028 | A1 | 28 February 2007 |
| | | | | JP | 2008-503486 | A | 07 February 2008 |
| | | | | US | 2005-0283028 | A1 | 22 December 2005 |
| | | | | US | 7074969 | B2 | 11 July 2006 |
| | | | | WO | 2006-009857 | A1 | 26 January 2006 |
| KR | 10-2008-0035697 | A | 23 April 2008 | CN | 101248104 | A | 20 August 2008 |
| | | | | CN | 101248104 | B | 02 March 2011 |
| | | | | EP | 1917288 | A1 | 07 May 2008 |
| | | | | EP | 1917288 | B1 | 20 April 2011 |
| | | | | JP | 2009-504880 | A | 05 February 2009 |
| | | | | US | 7157607 | B1 | 02 January 2007 |
| | | | | WO | 2007-021954 | A1 | 22 February 2007 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210120424
- US 6977291 B

- US 7745668 B